# EUROPEAN PATENT APPLICATION

(11) **EP 4 734 438 A1**
(43) Date of publication of application: **29.04.2026**
(21) Application number: 25211067.1
(22) Date of filing: 24.10.2025
(51) Int. Cl.: H04L 9/14, H04L 9/30

(54) **ELECTRONIC DEVICE AND CONTROLLING METHOD THEREOF**

(30) Priority: 25.10.2024 KR 20240147266; 25.10.2024 KR 20240147839; 19.03.2025 KR 20250035331; 03.07.2025 KR 20250089387; 12.08.2025 KR 20250111147; 30.09.2025 KR 20250142699
(71) Applicant: CRYPTO LAB INC., Gwanak-gu, Seoul 08826 (KR)
(72) Inventor: BAE, Youngjin, 08826 Seoul (KR); HANROT, Guillaume, 08826 Seoul (KR)
(74) Representative: Dragotti & Associati S.P.A.

(57) **Abstract**

Disclosed are an electronic device and a controlling method thereof. In particular, the electronic device includes a memory storing instructions; and a processor configured to execute the instructions, wherein the processor is configured to: obtain a first plaintext matrix and a second plaintext matrix, obtain a first ciphertext matrix by encrypting the first plaintext matrix based on a lattice-based encryption scheme, obtain a second ciphertext matrix by encrypting the second plaintext matrix based on a structure that includes two ciphertext pairs in which each of the two ciphertext pairs includes first-type and second-type matrices, obtain a plurality of decomposed components by decomposing elements in the first ciphertext matrix according to a predefined gadget vector, and obtain an output ciphertext corresponding to a product result between the first plaintext matrix and the second plaintext matrix based on inner-product computations between the plurality of decomposed components and elements in the second ciphertext matrix.

## Description

### BACKGROUND

### 1. Field

The present disclosure relates to an electronic device and a controlling method of an electronic device, and more particularly, an electronic device capable of performing matrix multiplication in a ciphertext state and a controlling method thereof.

### 2. Description of Related Art

Recently, as homomorphic encryption has been applied to various data processing environments, a demand has been increasing to perform matrix computations in an encrypted state. The homomorphic encryption allows a computation to be executed without decrypting a plaintext. However, the homomorphic encryption may pose an important challenge of efficient implementation due to high computational complexity and accumulation of error terms. In particular, if the homomorphic encryption is used to process the matrix computation including a plurality of data in a ciphertext state, a problem may arise in which a computational load and memory usage increase exponentially.

In this situation, ciphertext-ciphertext matrix multiplication (CCMM), in which one matrix is multiplied by another in the ciphertext state, has emerged as one of the most fundamental and important problems. However, in the related art, instead of directly performing CCMM, a method has generally been used in which CCMM is reduced to plaintext-plaintext matrix multiplication (PPMM), and rotation and key switching are then repeatedly performed. Such a method has a limitation in that its computational efficiency is significantly reduced.

In particular, a key switching process includes a mathematically complex number theoretic transform (NTT) computation, and may thus greatly increase a computational load and delay. In addition, an auxiliary key necessary for key exchange is required to be prepared in advance, thereby increasing memory usage of a system and causing a heavier management burden. Accordingly, the related art has limitations in terms of computational efficiency, resource consumption, and stability.

### SUMMARY

The present disclosure provides an electronic device capable of efficiently performing matrix multiplication in a ciphertext state while eliminating a complex computation process such as key switching, and a controlling method thereof.

Additional aspects will be partially disclosed in the following description, partially apparent from the description, or learned through implementing the disclosed embodiments.

According to an aspect of the present disclosure, provided is an electronic device including: a memory storing instructions; and a processor configured to execute the instructions, wherein the processor is configured to obtain a first plaintext matrix and a second plaintext matrix, obtain a first ciphertext matrix by encrypting the first plaintext matrix based on a lattice-based encryption scheme, obtain a second ciphertext matrix by encrypting the second plaintext matrix based on a structure that includes two ciphertext pairs in which each of the two ciphertext pairs includes first-type and second-type matrices, obtain a plurality of decomposed components by decomposing elements in the first ciphertext matrix according to a predefined gadget vector, and obtain an output ciphertext corresponding to a product result between the first plaintext matrix and the second plaintext matrix based on inner-product computations between the plurality of decomposed components and elements in the second ciphertext matrix.

The processor may be configured to obtain the first ciphertext matrix by coupling each row or each column of the first plaintext matrix with numerical values corresponding to a secret key of the lattice-based encryption scheme and converting the first plaintext matrix into one ciphertext pair including the first-type and second-type matrices.

The processor may be configured to convert the secret key of the lattice-based encryption scheme into a Toeplitz matrix, generate the second-type matrix by multiplying each row or each column of the first plaintext matrix by the Toeplitz matrix, and obtain the first ciphertext matrix by coupling the second-type matrix to the first-type matrix to form a ciphertext pair.

The processor may be configured to obtain the second ciphertext matrix to have a first ciphertext pair among the two ciphertext pairs correspond to the second plaintext matrix, and to have a second ciphertext pair among the two ciphertext pairs correspond to a product of an auxiliary secret key different from the secret key of the lattice-based encryption scheme and the second plaintext matrix.

The processor may be configured to obtain the second ciphertext matrix to have the first-type matrix included in each of the two ciphertext pairs correspond to the second plaintext matrix or to a product of an auxiliary secret key and the second plaintext matrix, and to have the second-type matrix included in each of the two ciphertext pairs correspond to the secret key of the lattice-based encryption scheme.

The processor may be configured to generate the second-type matrix by multiplying each element in the second plaintext matrix by a Toeplitz matrix, obtain a first ciphertext pair by coupling the generated second-type matrix to the first-type matrix, generate the second-type matrix by multiplying a product of each element in the second plaintext matrix and the auxiliary secret key by the Toeplitz matrix, obtain a second ciphertext pair by coupling the generated second-type matrix to the first-type matrix, and obtain the second ciphertext matrix including the first ciphertext pair and the second ciphertext pair.

The processor may be configured to obtain the plurality of decomposed components by decomposing the elements in the first ciphertext matrix according to digit components of the gadget vector, form an ordered pair including two inner-product results by performing inner-product computations respectively with the first-type and second-type matrices included in the second ciphertext matrix for each of the plurality of decomposed components, and obtain the output ciphertext by coupling the ordered pairs.

The processor may be configured to perform packing in which elements in the second plaintext matrix are coupled into one plaintext based on a common modulus commonly applied to the elements in the second plaintext matrix and a plurality of individual moduli corresponding to respective ones of a plurality of blocks in which the elements in the second plaintext matrix are separated before encrypting the second plaintext matrix, and obtain the second ciphertext matrix by encrypting the packed second plaintext matrix.

The processor may be configured to perform packing for the second plaintext matrix to express the elements in the second plaintext matrix as zero with respect to the common modulus, and to express the elements in the second plaintext matrix as element values multiplied by the common modulus with respect to respective ones of the plurality of individual moduli.

The plurality of individual moduli are set to be in a pairwise coprime relationship.

The processor may be configured to perform a modulus computation on the output ciphertext after obtaining the output ciphertext to extract a value corresponding to the common modulus and values corresponding to respective ones of the plurality of individual moduli, and separate and obtain the product result between the first plaintext matrix and the second plaintext matrix to correspond to the respective ones of the plurality of blocks based on the extracted values.

According to an aspect of the present disclosure, provided is a controlling method of an electronic device, the method including: obtaining a first plaintext matrix and a second plaintext matrix; obtaining a first ciphertext matrix by encrypting the first plaintext matrix based on a lattice-based encryption scheme; obtaining a second ciphertext matrix by encrypting the second plaintext matrix based on a structure that includes two ciphertext pairs in which each of the two ciphertext pairs includes first-type and second-type matrices; obtaining a plurality of decomposed components by decomposing elements in the first ciphertext matrix according to a predefined gadget vector; and obtaining an output ciphertext corresponding to a product result between the first plaintext matrix and the second plaintext matrix based on inner-product computations between the plurality of decomposed components and elements in the second ciphertext matrix.

According to an aspect of the present disclosure, provided is a non-transitory computer-readable recording medium including a program for executing a controlling method of an electronic device, wherein the method includes obtaining a first plaintext matrix and a second plaintext matrix, obtaining a first ciphertext matrix by encrypting the first plaintext matrix based on a lattice-based encryption scheme, obtaining a second ciphertext matrix by encrypting the second plaintext matrix based on a structure that includes two ciphertext pairs in which each of the two ciphertext pairs includes first-type and second-type matrices, obtaining a plurality of decomposed components by decomposing elements in the first ciphertext matrix according to a predefined gadget vector, and obtaining an output ciphertext corresponding to a product result between the first plaintext matrix and the second plaintext matrix based on inner-product computations between the plurality of decomposed components and elements in the second ciphertext matrix.

### BRIEF DESCRIPTION OF THE DRAWINGS

The above and other aspects, features, and advantages of the present disclosure will become more apparent from the following detailed description, which is described with reference to the accompanying drawings:
FIG. 1 is a diagram briefly illustrating a configuration of an electronic device according to an embodiment of the present disclosure;
FIG. 2 is a diagram illustrating in detail operations related to processes of obtaining a first ciphertext, a second ciphertext, an output ciphertext according to an embodiment of the present disclosure;
FIG. 3 is a diagram illustrating plaintext matrix packing according to an embodiment of the present disclosure; and
FIG. 4 is a flowchart illustrating a controlling method of an electronic device according to an embodiment of the present disclosure.

### DETAILED DESCRIPTION

The present disclosure may be variously modified and have several embodiments, and specific embodiments of the present disclosure are thus illustrated in the accompanying drawings and described in detail in the specification. However, it should be understood that the scope of the present disclosure are not limited to specific embodiments, and include all modifications, equivalents, and alternatives according to an embodiment of the present disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe the specific embodiments rather than limit the scope of the present disclosure. A term of a singular number may include its plural number unless explicitly indicated otherwise in the context.

In the present disclosure, the expression such as "have", "may have", "include", or "may include", indicates the presence of a corresponding feature (e.g., a numerical value, a function, an operation, or a component such as a part), and does not exclude the presence of an additional feature.

In the present disclosure, the expression such as "A or B", "least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the present disclosure, may indicate various components regardless of the sequence and/or importance of the components. These expressions are only used to distinguish one component and another component from each other, and do not limit the corresponding components.

If any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

On the other hand, if any component (e.g., the first component) is mentioned to be "directly coupled with/to" or "directly connected to" another component (e.g., the second component), it should be understood that yet another component (e.g., the third component) is not present between any component and another component.

An expression such as "configured (or set) to", used in the present disclosure, may be replaced by an expression such as "suitable for", "having the capacity to", "designed to", "adapted to", "made to", or "capable of", depending on a context. The expression "configured (or set) to" does not necessarily indicate "specifically designed to" in terms of hardware.

Instead, the expression "a device configured to", in any context, may indicate that the device may "perform~" together with another device or component. For example, a "processor configured (or set) to perform A, B, and C" may indicate a dedicated processor (e.g., an embedded processor) that may perform the corresponding operations or a general-purpose processor (e.g., a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor except for a "module" or a "part" that needs to be implemented by specific hardware.

Meanwhile, various elements and regions in the drawings are schematically illustrated. Therefore, the spirit of the present disclosure is not limited by relative sizes or intervals illustrated in the accompanying drawings.

Hereinafter, an embodiment of the present disclosure is described in detail with reference to the accompanying drawings so that those skilled in the art to which the present disclosure pertains may easily practice the present disclosure.

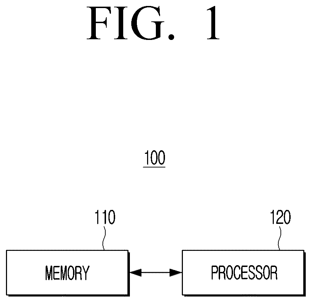

FIG. 1 is a diagram briefly illustrating a configuration of an electronic device 100 according to an embodiment of the present disclosure.

As illustrated in FIG. 1, the electronic device 100 may include a memory 110 and a processor 120. However, the configurations as illustrated in FIG. 1 are merely exemplary, and in implementing the present disclosure, a new configuration may be added in addition to the configurations illustrated in FIG. 1, or some configurations may be omitted therefrom. For example, the electronic device 100 may further include a communication interface capable of communicating with an external device (e.g., a wireless fidelity (Wi-Fi) module, a Bluetooth module, a wireless communication module, a near field communication (NFC) module, or an ultra-wide band (UWB) module), an input interface capable of receiving user input (e.g., a microphone or a touch screen), an output interface capable of outputting various information (e.g., a display or a speaker), or the like.

The memory 110 may store at least one instruction related to the electronic device 100. In addition, the memory 110 may store an operating system (O/S) for driving the electronic device 100. In addition, the memory 110 may also store various software programs or applications for the electronic device 100 to operate according to various embodiments of the present disclosure. In addition, the memory 110 may include a semiconductor memory such as a flash memory or a magnetic storage medium such as a hard disk.

In detail, the memory 110 may store various software modules for the electronic device 100 to operate according to the various embodiments of the present disclosure, and the processor 120 may execute the various software modules stored in the memory 110 to control operations of the electronic device 100. That is, the memory 110 may be accessed by the processor 120, and the processor 120 may performe reading, writing, modifying, deleting, updating, or the like of data.

Meanwhile, in the present disclosure, the term "memory 110" may be used to include the memory 110, a read-only memory (ROM) or a random access memory (RAM) in the processor 120, or a memory card (e.g., a micro secure digital (SD) card or a memory stick) mounted on the electronic device 100.

In an embodiment, the memory 110 may store information on an input ciphertext, an output ciphertext, and an encryption scheme (e.g., Cheon-Kim-Kim-Song (CKKS)) according to the present disclosure. The memory 110 may store various algorithms for performing operations according to the present disclosure. In addition, the memory 110 may store various information necessary for achieving objectives of the present disclosure, and the information stored in the memory 110 may also be updated as the information is received from the external device or input by a user.

The processor 120 may control overall operations of the electronic device 100. In detail, the processor 120 may be connected to the configurations of the electronic device 100 including the memory 110. The processor 120 may include processing circuitry and may be implemented as at least one processor 120. That is, the processor 120 may be implemented as one or two or more processors 120. The processor 120 may control the operations of the electronic device 100 by individually or collectively executing the instructions stored in the memory 110.

The processor 120 may be implemented in various forms. For example, the processor 120 may be implemented as at least one of an application specific integrated circuit (ASIC), an embedded processor, a microprocessor, hardware control logic, a hardware finite state machine (FSM), or a digital signal processor (DSP). Meanwhile, in the present disclosure, the term "processor 120" may be used to include a central processing unit (CPU), a graphic processing unit (GPU), and a micro processor unit (MPU).

In an embodiment, the processor 120 may convert plaintexts into ciphertexts and perform a matrix multiplication computation between the ciphertexts, thereby obtaining an output ciphertext corresponding to a product of the plaintexts. Hereinafter, the various embodiments performed by the processor 120 are described in detail.

"Encryption" according to the present disclosure may refer to a result of encrypting a plaintext based on a homomorphic encryption scheme. For example, the encryption according to the present disclosure may include the Cheon-Kim-Kim-Song (CKKS) encryption scheme, which is a homomorphic encryption scheme for complex-number approximate computations. However, the encryption according to the present disclosure is not limited to the CKKS scheme and may also be applied to various ciphertext schemes such as Fast Fully Homomorphic Encryption over the Torus (TFHE), Brakerski-Gentry-Vaikuntanathan scheme (BGV), and Brakerski-Fan-Vercauteren scheme (BFV).

The processor 120 may obtain a first plaintext matrix and a second plaintext matrix. In detail, the processor 120 may obtain the first plaintext matrix and the second plaintext matrix based on data stored in the memory 110 of the electronic device 100. In addition, the processor 120 may obtain the first plaintext matrix and the second plaintext matrix by receiving data stored in the external device. Here, a plaintext matrix may refer to data in a non-encrypted state and organized into a matrix structure.

For example, the plaintext matrix may have a structure in which a plurality of data are arranged along rows and columns rather than a single data element. In addition, the plaintext matrix may include different types of data such as integer data, real-number data, or complex-number data. The first plaintext matrix may refer to data obtained by the electronic device 100 and correspond to data referred to as a query, and the second plaintext matrix may refer to data obtained by an external server and correspond to data referred to as a database.

The processor 120 may obtain a first ciphertext matrix by encrypting the first plaintext matrix based on a lattice-based encryption scheme. Here, the lattice-based encryption scheme may refer to a cryptographic scheme in which security is ensured by utilizing intractability based on a lattice problem. In detail, the lattice-based encryption scheme may include various variants based on a Learning With Errors (LWE) problem. LWE may refer to a form in which a small error term is added to a linear equation, and may refer to a problem in which it is difficult to efficiently estimate an original secret vector in a state where an error term is present.

For example, the first ciphertext matrix may include a structure based on Ring Learning With Errors (RLWE), Module Learning With Errors (MLWE), Multi-Secret RLWE (MSRLWE, or shared-a RLWE), or Multi-Secret MLWE (MSMLWE, or shared-a MLWE). This structure may provide computational efficiency or a flexible data structure while maintaining basic intractability of LWE. However, a type of the first ciphertext matrix according to the present disclosure is not limited to the above-described examples.

The processor 120 may use a single structure such as RLWE or MLWE based on an environment, or may select a multi-secret structure such as MSRLWE or MSMLWE. The former may simplify computational efficiency, and the latter may enhance security in a multi-user environment or a shared-key-based environment.

In an embodiment, the processor 120 may obtain the first ciphertext matrix by coupling each row or each column of the first plaintext matrix with numerical values corresponding to a secret key of the lattice-based encryption scheme and converting the first plaintext matrix into one ciphertext pair including the first-type and second-type matrices.

The processor 120 may select each row of the first plaintext matrix and perform multiplication and addition computations with the secret key, thereby deriving the first-type matrix. In addition, the processor 120 may generate the second-type matrix by repeating the same computation on a column basis. The processor 120 may convert an entire plaintext matrix into a ciphertext pair by repeatedly applying this process.

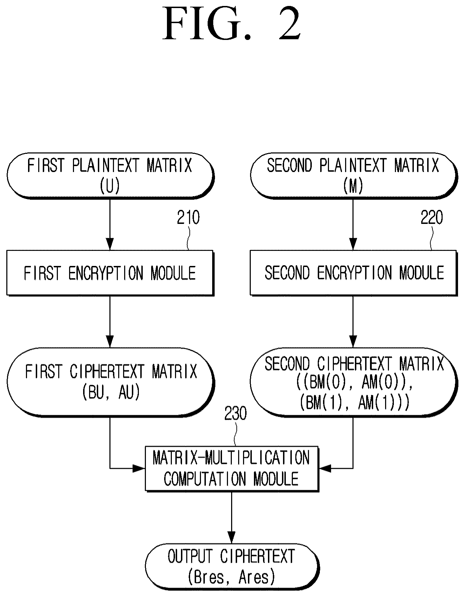

The first-type matrix may refer to a structure that includes a result of a linear transformation of input plaintext data and may include a component in which the plaintext matrix is directly reflected. The second-type matrix may refer to a structure that includes a component generated through a coupling computation with the secret key, and may serve to provide security based on the secret key. Accordingly, the ciphertext pair may form a structure in which plaintext data and secret-key elements are reflected together. The matrix referred to as the first-type matrix may refer to a component B, and the second-type matrix may refer to a component A, and such notation is used in the description provided with reference to FIG. 2.

The processor 120 may accumulate such ciphertext pairs, thereby completing the first ciphertext matrix that covers an entirety of the plurality of plaintext matrices rather than a single plaintext.

In an embodiment, the processor 120 may convert a secret key of the lattice-based encryption scheme into a Toeplitz matrix. The processor 120 may generate the second-type matrix by multiplying each row or each column of the first plaintext matrix by the Toeplitz matrix. The processor 120 may obtain the first ciphertext matrix by coupling the second-type matrix to the first-type matrix to form a ciphertext pair.

The Toeplitz matrix may refer to a special matrix structure in which diagonal elements have the same value, and may be used to express a polynomial defined in RLWE or RGSW as a matrix computation. Due to a characteristic that its diagonal elements are identical, the Toeplitz matrix may simplify a pattern of repetitive computations and increase the computational efficiency. The processor 120 may utilize this characteristic to effectively transform rows or columns of the first plaintext matrix, and the second-type matrix generated as a result may maintain security while reducing computational resource consumption.

The processor 120 may obtain a second ciphertext matrix by encrypting the second plaintext matrix based on a structure that includes two ciphertext pairs in which each of the two ciphertext pairs includes first-type and second-type matrices.

In detail, the processor 120 may separate the second plaintext matrix into a plurality of units of rows or columns and then generate a corresponding first-type matrix for each unit. Simultaneously, the processor 120 may generate the second-type matrix by performing a multiplication with the Toeplitz matrix to reflect the secret key in the unit data. The generated first-type and second-type matrices may be paired to form a ciphertext pair, and such pairs may be accumulated twice, thereby forming the second ciphertext matrix.

In an embodiment, the processor 120 may obtain the second ciphertext matrix to have a first ciphertext pair among the two ciphertext pairs correspond to the second plaintext matrix, and to have a second ciphertext pair among the two ciphertext pairs correspond to a product of an auxiliary secret key different from the secret key of the lattice-based encryption scheme and the second plaintext matrix.

For example, the processor 120 may receive each row of the second plaintext matrix to directly generate the first-type matrix, and then generate the first ciphertext pair by coupling the first-type matrix with a secret-key-based computation. The processor 120 may then again derive another first-type and second-type matrices by multiplying each row of the same second plaintext matrix by the auxiliary secret key and then coupling a result with the Toeplitz matrix, thereby generating the second ciphertext pair. The two ciphertext pairs may include different components because their inputs are different while sharing the same secret-key structure.

In an embodiment, the processor 120 may obtain the second ciphertext matrix to have the first-type matrix included in each of the two ciphertext pairs correspond to the second plaintext matrix or to a product of the auxiliary secret key and the second plaintext matrix, and to have the second-type matrix included in each of the two ciphertext pairs correspond to the secret key of the lattice-based encryption scheme.

That is, the processor 120 may first generate the first-type matrix by directly reflecting elements in the second plaintext matrix, and then generate another first-type matrix by reflecting values obtained by multiplying the same plaintext matrix by the auxiliary secret key. In both cases, the second-type matrix may be calculated in parallel through a multiplication with the Toeplitz matrix, and the respective matrices may form a pair. As a result, the second ciphertext matrix may be completed to have a structure that includes a plaintext-reflecting component and an auxiliary-secret-key-reflecting component together.

In an embodiment, the processor 120 may generate the second-type matrix by multiplying each element in the second plaintext matrix by the Toeplitz matrix. The processor 120 may obtain the first ciphertext pair by coupling the generated second-type matrix to the first-type matrix. The processor 120 may generate the second-type matrix by multiplying a product of each element in the second plaintext matrix and the auxiliary secret key by the Toeplitz matrix. The processor 120 may obtain the second ciphertext pair by coupling the generated second-type matrix to the first-type matrix. The processor 120 may obtain the second ciphertext matrix including the first ciphertext pair and the second ciphertext pair.

Here, the processor 120 may first select an element in the second plaintext matrix, and may perform a multiplication computation by mapping the selected element to a row or a column of the Toeplitz matrix, thereby calculating the second-type matrix. In parallel, the processor 120 may couple the same element with the auxiliary secret key and then derive another second-type matrix through multiplication with the same Toeplitz matrix. The second-type matrices obtained in this manner may be coupled with the corresponding first-type matrices to form respective ciphertext pairs, and the two pairs may be combined to finally generate the second ciphertext matrix.

The processor 120 may obtain a plurality of decomposed components by decomposing elements in the first ciphertext matrix according to a predefined gadget vector. In addition, the processor 120 may obtain an output ciphertext corresponding to a product result between the first plaintext matrix and the second plaintext matrix based on inner-product computations between the plurality of decomposed components and elements in the second ciphertext matrix.

In detail, the processor 120 may select each element in the first ciphertext matrix and separate the element according to digit components of the predefined gadget vector to decompose the element into a plurality of small unit components. The decomposed components may serve as minimum units capable of reconstructing an original ciphertext element and serve to increase subsequent computational efficiency. The processor 120 may sequentially input the respective decomposed components into inner-product computations with the corresponding elements in the second ciphertext matrix, and the inner-product results may be accumulated to finally generate an output ciphertext corresponding to a product of the first plaintext matrix and the second plaintext matrix.

In an embodiment, the processor 120 may obtain the plurality of decomposed components by decomposing the elements in the first ciphertext matrix according to the digit components of the gadget vector. The processor 120 may form an ordered pair including two inner-product results by performing inner-product computations respectively with the first-type and second-type matrices included in the second ciphertext matrix for each of the plurality of decomposed components, and may obtain the output ciphertext by coupling the formed ordered pairs.

For example, the processor 120 may select one decomposed component and multiply the decomposed component by a first-type matrix element included in the second ciphertext matrix, thereby obtaining a first inner-product result. Subsequently, the processor 120 may obtain a second inner-product result by multiplying the same component by a second-type matrix element. The processor 120 may bind the two results obtained in this way into an ordered pair and store the ordered pair, and may repeat the same procedure for other components. If ordered pairs for all components are formed, the processor 120 may synthesize and couple the ordered pairs to complete a single output ciphertext. Accordingly, the output ciphertext may have an encrypted structure in which the product result between the first plaintext matrix and the second plaintext matrix is reflected.

According to the embodiments described above, the electronic device 100 may bypass a key switching computation upon performing multiplication between the first ciphertext matrix and the second ciphertext matrix. Accordingly, a key transformation process based on a Number Theoretic Transform (NTT), which is essential in the related art, may be eliminated, thereby reducing computational delay and usage of the memory 110. This effect may contribute to increasing computational efficiency in a CCMM process and minimizing system resource consumption.

In addition, the processor 120 may form two ciphertext pairs upon encrypting the second plaintext matrix and perform inner-product computations between components obtained by decomposing the elements in the first ciphertext matrix according to the gadget vector and the second ciphertext matrix, thereby stably obtaining the output ciphertext corresponding to a product of the first plaintext matrix and the second plaintext matrix. Accordingly, the processor 120 may minimize the accumulation of errors occurring during a computation process, and directly utilize high-speed matrix-computation libraries (e.g., Open Basic Linear Algebra Subprograms (OpenBLAS) or CUDA Basic Linear Algebra Subprograms (cuBLAS)), thereby efficiently and stably performing large-scale matrix computations in the ciphertext state.

Implementing the various embodiments is described in more detail with reference to FIG. 2. The description provided with reference to FIG. 2 may use terms different from those used with reference to FIG. 1 to describe mathematical implementation in detail. However, the embodiments described with reference to FIG. 1 should not be construed as limiting by the description provided with reference to FIG. 2. Similarily, the embodiments described with reference to FIG. 2 should not be construed as limiting by the description provided with reference to FIG. 1.

FIG. 2 is a diagram illustrating in detail operations related to processes of obtaining a first ciphertext, a second ciphertext, and an output ciphertext according to an embodiment of the present disclosure.

As illustrated in FIG. 2, the processor 120 may implement the various embodiments according to the present disclosure by using a plurality of modules including a first encryption module 210, a second encryption module 220, and a matrix-multiplication computation module 230. The plurality of modules may be implemented as software modules or hardware modules, and some of the plurality of modules may be implemented as neural network models. Two or more of the plurality of modules may also be implemented as a single integrated module. Hereinafter, the various embodiments that the processor 120 may implement through the plurality of modules are described.

First, terms and notations related to the present disclosure are summarized.

Ring Learning With Errors (RLWE), Module Learning With Errors (MLWE), Multi-Secret RLWE (MSRLWE, or shared-a RLWE), and Multi-Secret MLWE (MSMLWE, or shared-a MLWE) may all be encryption schemes based on a modified learning problem of lattice-based cryptography. RLWE may be a ring-based structure, MLWE may be a module-based structure, and each of MSRLWE and MSMLWE may be an extended structure that use a plurality of secret keys.

If integers q and r are positive, a function h maps from R(q, N) to R(r, N), which may be referred to as gadget decomposition. Here, r may refer to a gadget rank. The gadget decomposition may satisfy the following conditions. A predefined gadget vector g = (g0, g1, ..., g(r-1)) exists, the inner product of h(a) and g is congruent to a modulo q for all a, and a size of h(a) may be smaller than a specific upper bound.

R(q, N) may refer to a set of polynomials whose coefficients are restricted by a modulus q, and R(N) may refer to a set of polynomials whose coefficients are defined over an integer set. Symbol a ≈ b may indicate that two values are almost equal and an error is small.

Representative schemes of the homomorphic encryption such as Cheon-Kim-Kim-Song (CKKS), Fast Fully Homomorphic Encryption over the Torus (TFHE), Brakerski-Gentry-Vaikuntanathan scheme (BGV), and Brakerski-Fan-Vercauteren scheme (BFV) may respectively define methods for encoding a plaintext. The same matrix-multiplication algorithms and encryption processes described below may be applied regardless of an encoding method, except for the encoding process.

CKKS or TFHE may be applied if a real-number plaintext space is used. A scale factor △ may be multiplied by a real-valued plaintext matrix and then rounded to generate an integer matrix M, and in the encryption process, a small integer error e may be added to M. That is, real-valued data may be approximated into an integer form and then encrypted.

BFV may be applied if a finite-field plaintext space is used. A scale factor △ may be multiplied by a finite-field plaintext matrix to obtain an integer matrix M. Here, the scale factor △ may be a quotient of a ciphertext modulus q separated by a finite-field size t. In an encryption process, a small integer error e may be added to M. That is, finite-field data may be expanded into a larger integer space and then encrypted.

BGV may be applied if a finite-field plaintext space is used. A finite-field plaintext matrix may be used as it is, and in an encryption process, a small integer error e multiplied by a finite-field size t may be added thereto. That is, finite-field data may be directly used and an error term may be added by coupling the error term with the finite-field size.

The first encryption module 210 may obtain the first ciphertext matrix based on the first plaintext matrix. In detail, the first encryption module 210 may obtain the first ciphertext matrix by encrypting the first plaintext matrix based on the lattice-based encryption scheme. As illustrated in FIG. 2, in the description provided with reference to FIG. 2, the first plaintext matrix may be denoted as U, the first ciphertext matrix may be denoted as (BU, AU), and notation suitable for each process may be used in encryption processes, matrix-multiplication computation processes, or the like. In this case, (BU, AU) may be defined to satisfy a relationship BU + AU*SU ~ U (mod q) if coupled with a secret key SU.

The second encryption module 220 may obtain the second ciphertext matrix based on the second plaintext matrix. In detail, the second encryption module 220 may obtain the second ciphertext matrix by encrypting the second plaintext matrix based on a structure that includes two ciphertext pairs in which each of the two ciphertext pairs includes the first-type and second-type matrices. As illustrated in FIG. 2, in the description provided with reference to FIG. 2, the second plaintext matrix may be denoted as M, the second ciphertext matrix may be denoted as ((BM(0), AM(0)), (BM(1), AM(1))), and notation suitable for each process may be used in encryption processes and matrix-multiplication computation processes. Here, (BM(0), AM(0)) may be set to satisfy a relationship BM(0) + AM(0) *SM ~ p*M (mod p*q) if coupled with a secret key SM, and (BM(1), AM(1)) may be set to satisfy a relationship BM(1) + AM(1)*SM ~ p*S'*M (mod p*q).

Hereinafter, encryption processes performed through the first encryption module 210 and the second encryption module 220 are described. In detail, the first encryption module 210 and the second encryption module 220 may perform conversion into the Toeplitz matrix and a row-wise encryption or a column-wise encryption process.

First, the Toeplitz matrix and matrix encryption are described.

An element of the polynomial ring R(q, N) or R(N) may be given in a form s(X) = s0 + s1·X + ... + s(N-1)·X(N-1). For the polynomial s(X), a matrix representation Toep(s) in a Toeplitz matrix form may be defined. The Toeplitz matrix Toep(s) may have the following structure.

In detail, a first row may be [s0, -s(N-1), ..., -s1], and a second row may be [s1, s0, ..., s2]. Subsequent rows follow the same rule, and the last row may be [s(N-1), s(N-2), ..., s0]. That is, Toep(s) may have a form in which each row is a rightward cyclic shift by one position of a row immediately above the corresonding row, based on coefficients of the polynomial. Here, terms corresponding to an upper-triangular part (a right portion of the first row) may have opposite signs.

The Toep(s) defined as described above may be utilized as a basic unit for representing a secret-key matrix or a plaintext matrix in subsequent encryption processes.

Next, the row-wise encryption is described.

Schemes used for encryption may be Ring Learning With Errors (RLWE), Module Learning With Errors (MLWE), Multi-Secret RLWE (MSRLWE), Ring Gentry-Sahai-Waters (RGSW), Matrix Gentry-Sahai-Waters (MGSW), and Multi-Secret RGSW (MSRGSW), and their ring degree may be N. Integers q and p may be moduli, the function h may be a gadget decomposition for q, and g may be a gadget vector.

A ciphertext may include multiple components, and each component may include two matrices (which may be referred to as B and A). Here, B and A may be expressed in a form in which a plaintext matrix M is hidden by coupling B and A with a secret-key matrix S. That is, a result of coupling B and A with the secret key may have a value similar to the plaintext matrix. A ciphertext having such a structure is referred to as a gadget-decomposed ciphertext.

Expressed in a vector form, the ciphertext may be represented as (B, A). Here, a result of coupling B and A with the secret key may have a value similar to the plaintext matrix. Here, the ciphertext (B, A) may be formed to satisfy a relationship B + A*S ~ M (mod q) if coupled with a secret key S. That is, a value obtained by adding B to A*S becomes approximately equal to the plaintext matrix M, thereby the ciphertext may safely include plaintext information. (* denotes multiplication, and ~ denotes approximate congruence.)

In addition, for a polynomial a and its gadget decomposition h(a), a computation ( 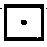 ) with the gadget-decomposed ciphertext may be defined into two values, one being a coupling result of h(a) and B and the other being a coupling result of h(a) and A. In other words, the computation ( 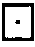 ) generates results in which an input polynomial is coupled respectively with two components of a ciphertext. The computation ( 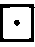 ) is independent of a structure of a particular ring, and may thus also be naturally defined and applied to a matrix structure.

If a column size d2 of a plaintext matrix is smaller than a ring degree N, only a case where d2 is a divisor of N may be considered, and otherwise remaining coefficients may be padded with zeros. Even if d2 is greater than N, only a case where N is a divisor of d2 may be considered.

A Toeplitz-matrix representation of a secret key may be extended as follows.

In case of RLWE, a secret key is an element of a ring R(N), and a matrix representation thereof may be defined as Toep(sk).

In case of MLWE, a secret key includes multiple components (sk0, ..., sk(N/k-1)), and each component sk(j) may be an element of a ring R(k). A matrix representation thereof may be defined by converting each component into the Toeplitz matrix and then concatenating the same vertically.

In case of MSRLWE, a secret key includes multiple components (sk0, ..., sk(k-1)), and each component may be an element of a ring R(N). A matrix representation thereof may be defined by converting each component into the Toeplitz matrix and then concatenating the same horizontally.

In addition, if an integer í and kl, k2, and k3 are given, block matrices A and B may be partitioned respectively into multiple small matrix pieces. Here, A ⊙*ᵥ* B may refer to a computation that multiplies corresponding blocks of block matrices A and B respectively and then concatenates those results side-by-side to form one matrix. For example, if A = [A1 | A2 | ... | An] and B = [B1; B2; ...; Bn], A⊙ᵥ B = [A1 * B1 | A2 * B² | ... | An * Bn].

Through this structure, an integer matrix M of a size d1×d2 may be expressed as follows through the row-wise encryption.

If the column size d2 is smaller than or equal to N, a ciphertext may be expressed as an RLWE ciphertext. In this case, the ciphertext is expressed as (B, A), and the secret key is defined as Toep(sk).

If the column size d2 is smaller than N, a ciphertext may be expressed as an MLWE ciphertext. In this case, the ciphertext is expressed as (B, A), and the secret key is defined based on an MLWE secret-key structure.

If the column size d2 is greater than N, a ciphertext may be expressed as an MSRLWE ciphertext. In this case, the ciphertext is expressed as (B, A), and the secret key may be extended into a form in which multiple blocks are juxtaposed.

Combining all cases, the ciphertext is expressed as (B, A), and a result of coupling B and A with the secret key may have a value similar to the plaintext matrix M.

The row-wise encryption using an RGSW ciphertext may be further defined. In this case, the ciphertext may include two parts, each of which may be represented as a set of vectors B and A. The two partial ciphertexts may be designed to be coupled with different secret keys. A first partial ciphertext may be coupled with a secret key S to generate a value similar to the plaintext matrix M, and a second partial ciphertext may be coupled with another secret key S' to generate a value similar to a plaintext matrix multiplied by the secret key.

If the column size d2 is smaller than or equal to N, a coupling result of the first partial ciphertext and the secret key S may correspond to the plaintext M, and a coupling result of the second partial ciphertext and the secret key S may correspond to the plaintext M multiplied by the secret key S'. In this case, a type of the secret key S' may vary depending on a size of d1. S' may be set to MSRLWE if d1 is greater than N, S' may be set to RLWE if d1 is equal to N, and S' may be set to MLWE if d1 is smaller than N.

Even if the column size d2 is greater than N, the same method may be applied. Here, the secret key S may be extended in a form in which multiple blocks are juxtaposed. The A ⊙ᵥ B computation may be used for the coupling between the two partial ciphertexts. In this case as well, the secret key S' may be selected as one among MSRLWE, RLWE, and MLWE depending on a size of d1, and a value of í may be selected by the user.

In summary, in the RGSW-based row-wise encryption, a coupling result of the first partial ciphertext and the secret key S generates the plaintext matrix M and a coupling result of the second partial ciphertext and the secret key S generates the plaintext matrix multiplied by the secret key S'. Even if d2 is greater than N, the same effect may be obtained through the secret-key juxtaposition structure and the A ⊙ᵥ B computation.

Next, the column-wise encryption is described.

The column-wise encryption may be understood as a simple transpose of the row-wise encryption. That is, a structure defined in the row-wise encryption is used as it is, and applied by swapping positions of rows and columns. Accordingly, computations used in the row-wise encryption may also be applied identically in a transposed form.

In this method, RLWE, MLWE, and MSRLWE ciphertexts may be expressed as (B, A). Here, transposed B and A and the secret-key matrix S may be coupled to derive a result similar to the plaintext matrix M. In other words, the ciphertext (B, A) may generate a result similar to the plaintext matrix through transposed computations.

In addition, an RGSW ciphertext may also be expressed as the column-wise encryption. In this case, the ciphertext may include two parts (ct(0), ct(1)), each of which may be represented as a set of vectors B and A. If the transposed B and A are coupled with the secret key, one may generate a value similar to the plaintext matrix M, and the other may generate a value similar to a form in which the plaintext matrix is multiplied by the secret key.

In conclusion, the column-wise encryption is a transposed form of the row-wise encryption and therefore does not require a separate new structure. Accordingly, the column-wise encryption is essentially the same as the row-wise encryption, and may refer to a method applied by swapping positions of rows and columns.

The matrix-multiplication computation module may obtain the output ciphertext corresponding to a product result between the first plaintext matrix and the second plaintext matrix based on a computation between the first ciphertext and the second ciphertext. In detail, the matrix-multiplication computation module may perform computation referred to as the ciphertext-ciphertext matrix multiplication (CCMM). The matrix-multiplication computation module may obtain a plurality of decomposed components by decomposing the elements in the first ciphertext matrix according to the predefined gadget vector. In addition, the processor 120 may obtain the output ciphertext corresponding to a product result between the first plaintext matrix and the second plaintext matrix based on inner-product computations between the plurality of decomposed components and the elements in the second ciphertext matrix.

The computation ( 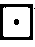 ) performed during a matrix-multiplication process may be used as a core computation unit in a ciphertext-ciphertext matrix multiplication (CCMM) process and may be a computation for obtaining two matrix components as a computation between a gadget decomposition of an input polynomial and gadget-decomposed ciphertext components. The computation ( 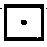 ) denotes coupling between an input polynomial or matrix a and a gadget-decomposed ciphertext ct = (B, A), and may be defined as follows. First, a gadget decomposition of a may be denoted as h(a), and ct may be expressed as (B0, B1, ..., Br-1; A0, A1, ..., Ar-1). Here, h(a) ct = (h(a)·B, h(a)·A), where h(a)·B corresponds to an inner product of h(a) and components (B0, ..., Br-1), and h(a)•A corresponds to an inner product of h(a) and components (A0, ..., Ar-1). That is, the computation ( 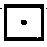 ) may refer to a computation that outputs new two components (B', A') through an outer product between the gadget decomposition of an input polynomial and ciphertext components, and may be used as a core computation unit in the CCMM process.

Hereinafter, the ciphertext-ciphertext matrix multiplication (CCMM) performed through the matrix-multiplication computation module is described.

Here, only the row-wise encrypted ciphertext is described, and the row-wise encrypted ciphertext may also be extended in the same manner by taking a transpose for the column-wise encrypted ciphertext. A method proposed in the present disclosure uses an RLWE-form ciphertext, an MLWE-form ciphertext, and an RGSW-form ciphertext and couples the ciphertexts with one another to ultimately perform matrix multiplication in the ciphertext state.

As a setting, the secret-key matrix SU may be a secret key defined in RLWE, MLWE, or MSRLWE schemes. Plaintext matrices U and M are integer matrices of sizes d1×d2 and d2×d3, respectively. Integers q and p may be moduli, the function h may be a gadget decomposition for q, and g may be a gadget vector.

Input ciphertexts may be defined as follows. A ciphertext ctU includes (BU, AU), and a ciphertext ctM includes (ctM(0), ctM(1)). Here, ctM(0) may be represented as (BM(0), AM(0)), and ctM(1) may be represented as (BM(1), AM(1)).

Conditions are as follows. If coupled with the secret key SU, BU and AU may generate a result similar to the plaintext matrix U. If coupled with the secret key SM, BM(0) and AM(0) may generate a result similar to p times the plaintext matrix M, and if coupled with the secret key SM, BM(1) and AM(1) may generate a result similar to a product of p times the secret key SM and the matrix M.

An output ciphertext ctRes is defined as (Bres, Ares), which may generate a result similar to a matrix product U·M if Bres and Ares are coupled with the secret key SM. Bres may be calculated by adding a result obtained by computing h(BU) with BM(0) through the computation ( 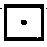 ) to a result obtained by computing h(AU) with BM(1) through the computation ( 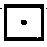 ). Ares may be calculated by adding a result obtained by computing h(BU) with AM(0) through the computation ( 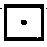 ) to a result obtained by computing h(AU) with AM(1) through the computation ( 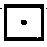 ).

In summary, CCMM receives the input ciphertexts (BU, AU) and (BM(0), AM(0)), (BM(1), AM(1)), generates the output ciphertext (Bres, Ares), and if the output ciphertext is coupled with the secret key, a result corresponding to a product of the plaintext matrices U and M may be obtained in the ciphertext state.

Meanwhile, the processor 120 may not only convert the second plaintext matrix into the second ciphertext matrix but also convert a ciphertext matrix encrypted by the lattice-based encryption scheme, such as the first ciphertext matrix, into the second ciphertext matrix and perform a computation between the converted second ciphertext matrix and the first ciphertext matrix.

For example, in case that an encrypted matrix multiplication is performed between first data obtained from a first external device and second data obtained from a second external device, if both the first data and the second data are plaintext data, the processor 120 may obtain the first ciphertext matrix based on the first plaintext matrix corresponding to the first data, and may obtain the second ciphertext matrix based on the second plaintext matrix corresponding to the second data. In contrast, if the first data are plaintext data and the second data are a ciphertext matrix encrypted by the lattice-based encryption scheme, the processor 120 may convert the ciphertext matrix encrypted by the lattice-based encryption scheme into a form of the second ciphertext matrix and then apply the present disclosure.

Hereinafter, as an example in which a ciphertext matrix encrypted by the lattice-based encryption scheme is given instead of the second plaintext matrix according to the present disclosure, conversion from RLWE to RGSW is described as an example of conversion into a form of the second ciphertext matrix. However, the present disclosure is not limited to the conversion based on such an example.

As a setting, S and S' may be RLWE secret keys, and M may be a plaintext matrix to be encrypted. Integers q and p may be moduli, h may be a gadget decomposition for q, and g may be a gadget vector.

An input may be given as a ciphertext ct = (B, A). Here, if coupled with the secret key S, B and A may have a value similar to p times the plaintext matrix M. In addition, an exchange process may exist to convert (S')T·S into S·(S')T with respect to the secret key S'.

An output may be defined as a ciphertext ct' (B', A'), and if coupled with the secret key S', B' and A' may have a value similar to a matrix S'M multiplied by p.

A calculation process may be as follows.

First, auxiliary ciphertexts ct0 = (B0, A0) and ct1 = (B1, A1) may be generated. Here, if coupled with a secret key (S)T, B0 and A0 may have a result similar to S'B (mod qp), and if coupled with a secret key (S)T, B1 and A1 may have a result similar to S'A (mod qp).

Second, through key switching, A0·(S')T and B1 + A1·(S')T may be calculated. Here, A0·(S')T and B1 + A1·(S')T may refer to new coupling results for the secret key S'.

Third, new auxiliary ciphertexts ct2 = (B2, A2) and ct3 = (B3, A3) may be calculated.

Fourth, B' and A' may be finally calculated. B' may be defined as a sum of B0 + B2 + B3, and A' may be defined as a sum of A2 + A3.

In summary, an RGSW-form ciphertext (B', A") may be finally generated after receiving the RLWE-form input ciphertext and undergoing a key-switching process. In this case, (B', A") may represent, in the ciphertext state, a result in which S' is multiplied to the plaintext matrix M by coupling with the secret key S'.

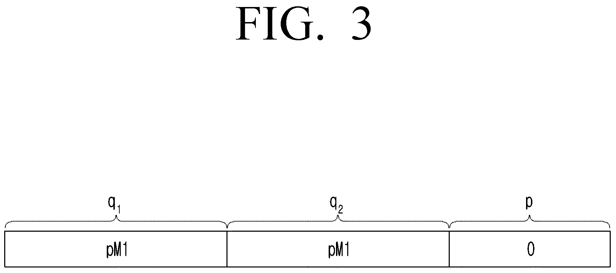

FIG. 3 is a diagram illustrating plaintext matrix packing according to an embodiment of the present disclosure.

The encryption process for the second plaintext matrix as described above may be related to a multiplication-computation problem between the first ciphertext matrix and the second ciphertext matrix. For example, the first ciphertext matrix may be defined with respect to the modulus q, and the second ciphertext matrix may be defined over a modulus pq in which a temporary modulus p is multiplied thereto. If multiplication between the first ciphertext matrix and the second ciphertext matrix is performed in this structure, a result ciphertext may finally be generated in which a product of the first plaintext matrix and the second plaintext matrix is reflected over the modulus q.

In this process, a reason why the second ciphertext matrix is defined over the modulus pq may be to reduce error terms arising from subsequent computations and to ensure a stable result by introducing the temporary modulus p. However, the introduction of the temporary modulus may accompany a problem of increasing a ciphertext size, thus making it difficult to secure efficiency only by simply encrypting the second plaintext matrix.

For example, in a specific implement, the first ciphertext matrix may be represented in a Ring Learning With Errors (RLWE) form, and the second ciphertext matrix may be represented in a Ring Gentry-Sahai-Waters (RGSW) form. In this case, packing of the second plaintext matrix may serve to alleviate a size-increase problem due to the introduction of the temporary modulus and support stable separation and restoration of results in block units through a modulus computation.

Even in this case, the second ciphertext matrix is defined over the modulus pq including the temporary modulus p, thus causing a problem in which the ciphertext size unnecessarily becomes large.

Accordingly, it may be desirable to perform a packing process for the second plaintext matrix before encrypting the second plaintext matrix, and hereinafter, embodiments related to packing of the first plaintext matrix are described.

First, packing may refer to a process of coupling the plurality of elements in the second plaintext matrix into one plaintext, thereby increasing encryption efficiency. In detail, packing may refer to a process in which a plurality of blocks are coupled into one plaintext structure, and packing according to the present disclosure may be performed particularly based on a common modulus and individual moduli.

A block may refer to an independent region set to separate elements in the second plaintext matrix, and each block may correspond to a specific individual modulus and store values converted based on the corresponding modulus. Referring to FIG. 3, the elements in the second plaintext matrix may be disposed by being separated into two blocks respectively corresponding to q1 and q2. Values separated in block units as described above may be managed simultaneously within one plaintext structure, and in subsequent encryption and decryption processes, the entire structure may thus be efficiently processed while maintaining independence of each block.

The common modulus may refer to a single modulus value commonly applied to all elements in the second plaintext matrix, and function as a reference for computations between blocks. The common modulus may function as a value multiplied to each block within a packed plaintext structure and provide a consistent reference in subsequent modulus computations.

The individual modulus may refer to a modulus value independently applied to each block to separate the elements in the second plaintext matrix and function to prevent collisions between the plurality of blocks. The individual moduli may be set to be in a pairwise coprime relationship, and the values stored in each block may thus be interpreted independently without confusion.

Unpacking may refer to a process in which blocks coupled to each other in the packing process are separated back into original individual data units with respect to an encrypted result or a decrypted result. Through the unpacking, common-modulus components and individual-modulus components may be independently extracted from a packed plaintext or ciphertext.

In an embodiment, the processor 120 may perform packing in which the elements in the second plaintext matrix are coupled into one plaintext based on the common modulus commonly applied to the elements in the second plaintext matrix and the plurality of individual moduli corresponding to respective ones of the plurality of blocks in which the elements in the second plaintext matrix are separated before encrypting the second plaintext matrix. In addition, the processor 120 may obtain the second ciphertext matrix by encrypting the packed second plaintext matrix.

Referring to FIG. 3, the respective elements in the second plaintext matrix may be coupled into one plaintext based on a common modulus p and the plurality of individual moduli q1 and q2. The number of individual moduli is not necessarily limited to two. In detail, as illustrated in FIG. 3, a plaintext may be separated into three regions, a first region may be a block corresponding to q1, a second region may be a block corresponding to q2, and a third region may be a block corresponding to the common modulus p. Accordingly, a value pM1 may be recorded in which the common modulus p is multiplied thereto in the block corresponding to q1, a value pM2 may be recorded in which p is multiplied in the block corresponding to q2, and the block corresponding to p may be set to zero.

The processor 120 may dispose the elements in the second plaintext matrix by separating the elements into the block corresponding to q1 and the block corresponding to q2, and then couple the elements in the second plaintext matrix by multiplying the common modulus p to each block. The plaintext formed as described above may simultaneously include values separated according to the individual moduli q1 and q2 and values in which the common modulus p is multiplied thereto. As a result, the processor 120 may compressively couple the elements in the second plaintext matrix into one structure in consideration of the individual moduli and the common modulus together. In modulus interpretation, such a packed plaintext may be interpreted as pM1 for q1, as pM2 for q2, and as zero for p, respectively.

This method may allow the second plaintext matrix, which is packed and then encrypted, to be easily separated into the common-modulus and individual-modulus units through a decryption process or the modulus computation. That is, as illustrated in FIG. 3, a packing structure according to the present disclosure may provide a basis for independently referencing or separating each block in the subsequent computations.

In an embodiment, the processor 120 may perform packing for the second plaintext matrix to express the elements in the second plaintext matrix as zero with respect to the common modulus, and to express the elements in the second plaintext matrix as element values multiplied by the common modulus with respect to respective ones of the plurality of individual moduli.

Referring to FIG. 3, values of the elements in the second plaintext matrix may be all filled with zeros in the block corresponding to the common modulus p. The reason is to allow a common-modulus part to simply function as a delimiter to allow actual data values not to be reflected therein. In contrast, in the blocks in which the elements in the second plaintext matrix correspond to the individual moduli q1 and q2, values may be disposed in which the common modulus p is multiplied to the respective element values. Accordingly, the value disposed in the q1 block may be represented as pM1, and the value disposed in the q2 block may be represented as pM2.

For example, if one element included in the second plaintext matrix has a specific value m, in FIG. 3, a value may be stored in a form of p*m in the block corresponding to q1, and the same p*m form may be recorded in the block corresponding to q2. As described above, if coupled with individual moduli, each element value may be expressed in a state where the common modulus is multiplied thereto, thereby ensuring independence between the blocks upon performing subsequent modulus computations and simultaneously maintaining consistency of computations based on the common modulus.

Accordingly, the structure illustrated in FIG. 3 may include a single block filled with zeros with respect to the common modulus and a plurality of blocks in which element values multiplied by the common modulus are recorded with respect to the individual moduli. Such a structure may be utilized to efficiently reconstruct or separate the elements in the second plaintext matrix during subsequent encryption and decryption processes.

In an embodiment, the plurality of individual moduli may be set to be in a pairwise coprime relationship.

Here, the pairwise coprime relationship may refer to a property in which two numbers have no common divisors other than 1. If the plurality of individual moduli are set to be in the pairwise coprime relationship, remainder-computational results corresponding to respective moduli may be independently maintained, and the elements in the plaintext matrix may thus be expressed without collision.

For example, if the second plaintext matrix is separated into a plurality of blocks, elements in each block may be expressed by individual moduli having a pairwise coprime relationship, and values of different blocks may thus be accurately encoded without being duplicated or confused. Accordingly, by setting the plurality of individual moduli to be in a pairwise coprime relationship, the processor 120 may ensure that a computational result based on a packed plaintext is faithfully restored even after undergoing the modulus computation.

In an embodiment, the processor 120 may perform the modulus computation on the output ciphertext after obtaining the output ciphertext to extract a value corresponding to the common modulus and values corresponding to respective ones of the plurality of individual moduli. In addition, the processor 120 may separate and obtain the product result between the first plaintext matrix and the second plaintext matrix to correspond to respective ones of the plurality of blocks based on the extracted values.

In detail, the modulus computation may be a core procedure for interpreting a common-modulus structure and a plurality of individual-modulus structure applied at a packing stage. The processor 120 may extract a common component functioning as a reference for an overall computational result by computing the output ciphertext based on the common modulus, and simultaneously obtain unique components for each block independently through computations based on the individual moduli, by separating the components from one another. For example, even if a product result of the first plaintext matrix and the second plaintext matrix is expressed in a single matrix form, the processor 120 may reconstruct a result for each block based on results separated by the individual moduli. In this process, a component corresponding to q1 may be derived as pM1, a component corresponding to q2 may be derived as pM2, and a component corresponding to p may be maintained as zero to be utilized to identify a block boundary.

FIG. 3 illustrates a process in which common-modulus and individual-modulus components are separated respectively through a modulus computation on the output ciphertext. As illustrated in FIG. 3, the processor 120 may separate and restore a product result to correspond to a plurality of blocks by utilizing the extracted components, thereby simultaneously maintaining accuracy in a block unit and consistency of an overall computation.

In an embodiment, the processor 120 may determine the number of blocks for division before coupling the elements in the second plaintext matrix into one plaintext structure. The determined number of blocks may correspond to the number of individual moduli to which the elements in the second plaintext matrix are applied, and the processor 120 may perform packing by disposing each element in a corresponding block based on the number.

For example, if the processor 120 determines to dispose the elements in the second plaintext matrix by separating the elements into two blocks, the processor 120 may perform packing to allow a first block to store element values converted based on a first individual modulus and a second block to store element values converted based on a second individual modulus. In another embodiment, if three or more blocks are determined, the processor 120 may set each block to correspond to a different individual modulus and perform packing according to the same procedure.

According to this embodiment, the electronic device 100 may predetermine the number of the elements in the second plaintext matrix to be separated into a plurality of blocks, and then perform packing based on the determined number, thereby securing consistency of the encryption process. The number of blocks and individual moduli corresponding thereto may be clearly set, and division in a block unit may thus be stably maintained even after a ciphertext is generated, and the elements may be separated and restored without confusion in the decryption process.

In addition, a balance between computational efficiency and a parameter size may vary depending on the number of blocks. As the number of blocks increases, the elements in the second plaintext matrix may be coupled to one another more compressively to reduce a ciphertext size. However, larger moduli and parameters may be simultaneously required, thereby increasing computation complexity and resource consumption. In contrast, if the number of blocks is set to be small, a ciphertext size may increase although computation resource consumption decreases. Accordingly, the electronic device 100 may provide a basis for selecting an appropriate number of blocks in consideration of a trade-off between storage/transmission efficiency and computational efficiency in a given environment. Meanwhile, the packing structure according to the present disclosure may be implemented based on a Chinese Remainder Theorem (CRT), and also be applied to various schemes such as a Residue Number System (RNS).

According to an embodiment described above with reference to FIG. 3, the electronic device 100 may coupe elements into one structure based on a plurality of individual moduli before encrypting the second plaintext matrix, thereby alleviating a problem in which a ciphertext size unnecessarily becomes large due to introduction of a temporary modulus. In addition, such a structure may directly extract and use each block as it is in the decryption and an unpacking process even after a ciphertext is generated, thereby stably separating or restoring the computational result in a block unit without performing additional complex computations. Accordingly, the electronic device 100 according to the present disclosure may secure stability and consistency in the computation and decryption processes while simultaneously increasing efficiency in the encryption process.

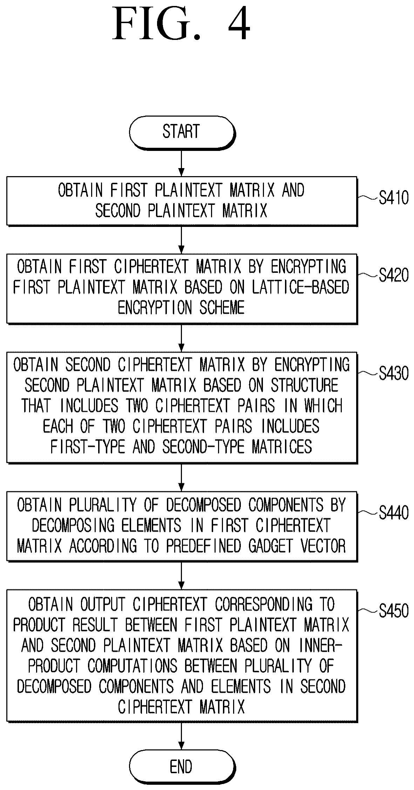

FIG. 4 is a flowchart illustrating a controlling method of an electronic device 100 according to an embodiment of the present disclosure.

The electronic device 100 may obtain the first plaintext matrix and the second plaintext matrix (S410). In detail, the electronic device 100 may obtain the first plaintext matrix and the second plaintext matrix based on the data stored in the memory 110 of the electronic device 100.

The electronic device 100 may obtain the first ciphertext matrix by encrypting the first plaintext matrix based on the lattice-based encryption scheme (S420).

In an embodiment, the electronic device 100 may obtain the first ciphertext matrix by coupling each row or each column of the first plaintext matrix with the numerical values corresponding to the secret key of the lattice-based encryption scheme and converting the first plaintext matrix into one ciphertext pair including the first-type and second-type matrices.

In an embodiment, the electronic device 100 may convert the secret key of the lattice-based encryption scheme into the Toeplitz matrix. The electronic device 100 may generate the second-type matrix by multiplying each row or each column of the first plaintext matrix by the Toeplitz matrix. The electronic device 100 may obtain the first ciphertext matrix by coupling the second-type matrix to the first-type matrix to form a ciphertext pair.

The electronic device 100 may obtain the second ciphertext matrix by encrypting the second plaintext matrix based on the structure that includes two ciphertext pairs in which each of the two ciphertext pairs includes the first-type and second-type matrices (S430).

In an embodiment, the electronic device 100 may obtain the second ciphertext matrix to have the first ciphertext pair among the two ciphertext pairs correspond to the second plaintext matrix, and to have the second ciphertext pair among the two ciphertext pairs correspond to a product of the auxiliary secret key different from the secret key of the lattice-based encryption scheme and the second plaintext matrix.

In an embodiment, the electronic device 100 may obtain the second ciphertext matrix to have the first-type matrix included in each of the two ciphertext pairs correspond to the second plaintext matrix or to a product of the auxiliary secret key and the second plaintext matrix, and to have the second-type matrix included in each of the two ciphertext pairs correspond to the secret key of the lattice-based encryption scheme.

In an embodiment, the electronic device 100 may generate the second-type matrix by multiplying each element in the second plaintext matrix by the Toeplitz matrix. The electronic device 100 may obtain the first ciphertext pair by coupling the generated second-type matrix to the first-type matrix. The electronic device 100 may generate the second-type matrix by multiplying a product of each element in the second plaintext matrix and the auxiliary secret key by the Toeplitz matrix. The electronic device 100 may obtain the second ciphertext pair by coupling the generated second-type matrix to the first-type matrix. The electronic device 100 may obtain the second ciphertext matrix including the first ciphertext pair and the second ciphertext pair.

The electronic device 100 may obtain the plurality of decomposed components by decomposing the elements in the first ciphertext matrix according to the predefined gadget vector (S440). In addition, the electronic device 100 may obtain the output ciphertext corresponding to a product result between the first plaintext matrix and the second plaintext matrix based on inner-product computations between the plurality of decomposed components and the elements in the second ciphertext matrix (S450).

In an embodiment, the electronic device 100 may obtain the plurality of decomposed components by decomposing the elements in the first ciphertext matrix according to the digit components of the gadget vector. The electronic device 100 may form the ordered pair including two inner-product results by performing inner-product computations respectively with the first-type and second-type matrices included in the second ciphertext matrix for each of the plurality of decomposed components, and may obtain the output ciphertext by coupling the formed ordered pairs.

Meanwhile, the controlling method of the electronic device 100 according to the above-described embodiment may be implemented as a program and provided to the electronic device 100. In particular, the program including the controlling method of the electronic device 100 may be stored and provided in a non-transitory computer readable medium.

In detail, in the non-transitory computer-readable recording medium including the program for executing the controlling method of an electronic device 100, the method may include obtaining a first plaintext matrix and a second plaintext matrix, obtaining a first ciphertext matrix by encrypting the first plaintext matrix based on a lattice-based encryption scheme, obtaining a second ciphertext matrix by encrypting the second plaintext matrix based on a structure that includes two ciphertext pairs in which each of the two ciphertext pairs includes first-type and second-type matrices, obtaining a plurality of decomposed components by decomposing elements in the first ciphertext matrix according to a predefined gadget vector, and obtaining an output ciphertext corresponding to a product result between the first plaintext matrix and the second plaintext matrix based on inner-product computations between the plurality of decomposed components and elements in the second ciphertext matrix.

Hereinabove, the controlling method of an electronic device 100 and the computer-readable recording medium including the program for executing the controlling method of an electronic device 100 are briefly described, only to omit redundant descriptions thereof, and the various embodiments regarding the electronic device 100 may also be applied to the controlling method of an electronic device 100 and the computer-readable recording medium including the program for executing the controlling method of an electronic device 100.

The machine-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored.

According to an embodiment, the methods according to the various embodiments disclosed in the present disclosure may be included and provided in a computer program product. The computer program product may be traded as a commodity between a seller and a purchaser. The computer program product may be distributed in a form of the machine-readable storage medium (e.g., a compact disc read only memory (CD-ROM)), or may be distributed online (e.g., by download or upload) via an application store (e.g., PlayStore^{™}) or directly between two user devices (e.g., smartphones). In case of the online distribution, at least a part of the computer program product (e.g., downloadable app) may be at least temporarily stored or temporarily provided in the machine-readable storage medium such as a server memory 110 of a manufacturer, a server memory of an application store, or a relay server memory.

Each of components (for example, modules or programs) according to the various embodiments of the present disclosure as described above may include a single entity or a plurality of entities, and some of the corresponding sub-components described above may be omitted or other sub-components may be further included in the various embodiments. Alternatively or additionally, some of the components (for example, the modules or the programs) may be integrated into one entity, and may perform functions performed by the respective corresponding components before being integrated in the same or similar manner.

Operations performed by the modules, the programs or other components according to the various embodiments may be executed in a sequential manner, a parallel manner, an iterative manner or a heuristic manner, at least some of the operations may be performed in a different order or be omitted, or other operations may be added.

Meanwhile, the term "~er/~or" or "module" used in the present disclosure may include a unit including hardware, software or firmware, and may be used interchangeably with the term, for example, a logic, a logic block, a component or a circuit. The "~er/~or" or "module" may be an integrally formed component, or a minimum unit or part performing one or more functions. For example, the module may include an application-specific integrated circuit (ASIC).

The various embodiments of the present disclosure may be implemented by software including an instruction stored in the machine-readable storage medium (for example, a computer-readable storage medium). A machine may be an apparatus that invokes the stored instruction from the storage medium, may be operated based on the invoked instruction, and may include the electronic device (e.g., the electronic device 100) according to the disclosed embodiments.

If the instruction is executed by the processor, the processor may directly perform a function corresponding to the instruction, or perform the function by using other components under control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic device comprising:
a memory storing instructions; and
a processor configured to execute the instructions,
wherein the processor is configured to
obtain a first plaintext matrix and a second plaintext matrix,
obtain a first ciphertext matrix by encrypting the first plaintext matrix based on a lattice-based encryption scheme,
obtain a second ciphertext matrix by encrypting the second plaintext matrix based on a structure that includes two ciphertext pairs in which each of the two ciphertext pairs includes first-type and second-type matrices,
obtain a plurality of decomposed components by decomposing elements in the first ciphertext matrix according to a predefined gadget vector, and
obtain an output ciphertext corresponding to a product result between the first plaintext matrix and the second plaintext matrix based on inner-product computations between the plurality of decomposed components and elements in the second ciphertext matrix.

2. The electronic device as claimed in claim 1, wherein the processor is configured to obtain the first ciphertext matrix by coupling each row or each column of the first plaintext matrix with numerical values corresponding to a secret key of the lattice-based encryption scheme and converting the first plaintext matrix into one ciphertext pair including the first-type and second-type matrices.

3. The electronic device as claimed in claim 2, wherein the processor is configured to
convert the secret key of the lattice-based encryption scheme into a Toeplitz matrix,
generate the second-type matrix by multiplying each row or each column of the first plaintext matrix by the Toeplitz matrix, and
obtain the first ciphertext matrix by coupling the second-type matrix to the first-type matrix to form a ciphertext pair.

4. The electronic device as claimed in claim 1, wherein the processor is configured to obtain the second ciphertext matrix to have a first ciphertext pair among the two ciphertext pairs correspond to the second plaintext matrix, and to have a second ciphertext pair among the two ciphertext pairs correspond to a product of an auxiliary secret key different from the secret key of the lattice-based encryption scheme and the second plaintext matrix.

5. The electronic device as claimed in claim 1, wherein the processor is configured to obtain the second ciphertext matrix to have the first-type matrix included in each of the two ciphertext pairs correspond to the second plaintext matrix or to a product of an auxiliary secret key and the second plaintext matrix, and to have the second-type matrix included in each of the two ciphertext pairs correspond to the secret key of the lattice-based encryption scheme.

6. The electronic device as claimed in claim 5, wherein the processor is configured to
generate the second-type matrix by multiplying each element in the second plaintext matrix by a Toeplitz matrix,
obtain a first ciphertext pair by coupling the generated second-type matrix to the first-type matrix,
generate the second-type matrix by multiplying a product of each element in the second plaintext matrix and the auxiliary secret key by the Toeplitz matrix,
obtain a second ciphertext pair by coupling the generated second-type matrix to the first-type matrix, and
obtain the second ciphertext matrix including the first ciphertext pair and the second ciphertext pair.

7. The electronic device as claimed in claim 1, wherein the processor is configured to
obtain the plurality of decomposed components by decomposing the elements in the first ciphertext matrix according to digit components of the gadget vector,
form an ordered pair including two inner-product results by performing inner-product computations respectively with the first-type and second-type matrices included in the second ciphertext matrix for each of the plurality of decomposed components, and
obtain the output ciphertext by coupling the ordered pairs.

8. The electronic device as claimed in claim 1, wherein the processor is configured to
perform packing in which elements in the second plaintext matrix are coupled into one plaintext based on a common modulus commonly applied to the elements in the second plaintext matrix and a plurality of individual moduli corresponding to respective ones of a plurality of blocks in which the elements in the second plaintext matrix are separated before encrypting the second plaintext matrix, and
obtain the second ciphertext matrix by encrypting the packed second plaintext matrix.

9. The electronic device as claimed in claim 8, wherein the processor is configured to perform packing for the second plaintext matrix to express the elements in the second plaintext matrix as zero with respect to the common modulus, and to express the elements in the second plaintext matrix as element values multiplied by the common modulus with respect to respective ones of the plurality of individual moduli.

10. The electronic device as claimed in claim 8, wherein the plurality of individual moduli are set to be in a pairwise coprime relationship.

11. The electronic device as claimed in claim 8, wherein the processor is configured to
perform a modulus computation on the output ciphertext after obtaining the output ciphertext to extract a value corresponding to the common modulus and values corresponding to respective ones of the plurality of individual moduli, and
separate and obtain the product result between the first plaintext matrix and the second plaintext matrix to correspond to the respective ones of the plurality of blocks based on the extracted values.

12. A controlling method of an electronic device, the method comprising:
obtaining a first plaintext matrix and a second plaintext matrix;
obtaining a first ciphertext matrix by encrypting the first plaintext matrix based on a lattice-based encryption scheme;
obtaining a second ciphertext matrix by encrypting the second plaintext matrix based on a structure that includes two ciphertext pairs in which each of the two ciphertext pairs includes first-type and second-type matrices;
obtaining a plurality of decomposed components by decomposing elements in the first ciphertext matrix according to a predefined gadget vector; and
obtaining an output ciphertext corresponding to a product result between the first plaintext matrix and the second plaintext matrix based on inner-product computations between the plurality of decomposed components and elements in the second ciphertext matrix.

13. A non-transitory computer-readable recording medium including a program for executing a controlling method of an electronic device, wherein the method includes
obtaining a first plaintext matrix and a second plaintext matrix,
obtaining a first ciphertext matrix by encrypting the first plaintext matrix based on a lattice-based encryption scheme,
obtaining a second ciphertext matrix by encrypting the second plaintext matrix based on a structure that includes two ciphertext pairs in which each of the two ciphertext pairs includes first-type and second-type matrices,
obtaining a plurality of decomposed components by decomposing elements in the first ciphertext matrix according to a predefined gadget vector, and
obtaining an output ciphertext corresponding to a product result between the first plaintext matrix and the second plaintext matrix based on inner-product computations between the plurality of decomposed components and elements in the second ciphertext matrix.
